Europäisches Patentamt

European Patent Office

Office européen des brevets

(19)

(11) Publication number: **0 046 616**
**B1**

(12) **EUROPEAN PATENT SPECIFICATION**

(45) Date of publication of patent specification: **13.06.84**

(21) Application number: **81200902.5**

(22) Date of filing: **13.08.81**

(51) Int. Cl.³: **F 16 L  37/08,  B 29 F  1/00, B 29 C  1/14**

(54) Coupling pipe part for interconnecting corrugated pipe parts and pipe connection.

(30) Priority: **22.08.80 NL  8004770**

(43) Date of publication of application:
**03.03.82 Bulletin 82/9**

(45) Publication of the grant of the patent:
**13.06.84 Bulletin 84/24**

(84) Designated Contracting States:
**AT BE CH DE FR GB IT LI LU NL SE**

(56) References cited:
**CH - A - 379 854**
**DE - U - 1 989 794**
**FR - A - 1 130 575**
**FR - A - 2 389 823**
**GB - A - 1 294 859**
**US - A - 4 247 136**

(73) Proprietor: **WAVIN B.V.**
**Händellaan 251**
**NL-8031 EM  Zwolle (NL)**

(72) Inventor: **Nicholas, Terry George**
**7 Paddock Heights**
**Twyford, Berks (GB)**

(74) Representative: **van der Veken, Johannes Adriaan et al,**
**EXTERPATENT Willem Witsenplein 4**
**NL-2596 BK  's-Gravenhage (NL)**

Courier Press, Leamington Spa, England.

## Description

The invention relates to a coupling pipe part for interconnecting corrugated pipe parts which comprise at least one coupling element located at distance from the end of the pipe part and having a portion directed towards the inside of the coupling pipe part, said coupling element comprising a resilient lip formed in the coupling pipe part by wall slits.

Such a coupling pipe part is known from GB—A—1.294.859. This coupling pipe part presents the disadvantage that after having coupled said coupling pipe part with a corrugated pipe the two parts may be disconnected when the corrugated pipe part is subjected to bending forcing and tensile forces. This last disadvantage is mainly due to the use of an inwardly bent resilient lip.

There are also known, coupling pipe parts comprising coupling element consisting of cams directed towards the inside of the coupling pipe part, formed by a deformation of the wall of the coupling pipe part. In order to couple a corrugated pipe part to such a coupling pipe part, a corrugated pipe part is pressed into the coupling pipe part until at least one transverse corrugation of the corrugated pipe has passed the aforesaid cams.

Coupling pipe parts of such a type present the disadvantage that the cams as provided easily bend in axial direction as a result of which said corrugated pipe part may be pulled out of the coupling pipe part, when great tensile forces are exerted upon a corrugated pipe part connected to such a coupling pipe part.

Another disadvantage consists in that the manufacture of such a coupling pipe part comprises two steps, i.e. first the shaping of the coupling pipe part and secondly, in a separate step, the shaping of the cams which serve as a coupling element.

So as to overcome said disadvantages, a coupling pipe part has also been proposed in the form of a socket internally provided with deformation cams which compress an entire corrugated pipe and render it somewhat oval, as a result of which an inwardly directed coupling element likewise provided within the coupling pipe part can engage a groove provided between two corrugations of a corrugated pipe and so establishes the connection.

The great disadvantage of the latter coupling pipe part consists in that the two parts are disconnected, when bending forces and tensile forces are exerted upon a corrugated pipe part.

It is now the aim of the invention to provide a coupling pipe part, in which said disadvantages do not occur, as the coupling pipe part is able to provide a connecting means being very resistant to tensile forces.

This object is attained according to the invention in that a connection pipe part for interconnecting corrugated pipe parts which comprise at least one coupling element located at distance from the end of the pipe part and having a portion directed towards the axis of the coupling pipe part, said coupling element comprising a resilient lip formed in the coupling pipe part by wall slits, is characterized in that the lip extends parallel to the axis of the pipe part and the part of said lip provided with said inwardly directed portion has a larger width than the width of the transition area between the lip and the pipe wall of the coupling pipe part.

By using a coupling pipe part according to the invention, a corrugated pipe part to be inserted into the coupling pipe part can easily pass along the radially resilient displaceable lip as in first instance said lip moves towards the outside but thereafter said lip with said inwardly directed portion will establish a firm engagement with the corrugated pipe part, due to its resiliency.

An important advantage is also that it is not possible for the lip to bend inwardly as in such a case the resilient lip of the coupling pipe part itself is then supported by a corrugated pipe part.

Due to the use of a resilient lip having a larger width than the width of the transition area between the lip and the pipe wall, the outwardly directed resilient force of the coupling element also remains quite limited, whereas the contact area between the resilient lip and the flank of a corrugation of a corrugated pipe part is favourably influenced.

In a preferred embodiment a rectangular cutout is provided around the lip, thereby forming a gap as this allows a very easy manufacture of the coupling pipe part.

Advantageously, the coupling pipe part is formed by means of a core which is composed of two parts and whose partial line lies at the location of the abutment elements and coupling cams, an outer mould being provided with inwardly directed mould projections forming a gap next to a lip to be formed.

In order to facilitate the introduction of a corrugated pipe into a coupling pipe part according to the invention the portion comprises a rigid coupling cam integral with the lip and located at distance from the free end of the lip and said coupling cam being provided with a front face slanting towards the inside of the coupling pipe part. This also provides an excellent resistance to tensile forces.

The transition area between the lip and the coupling pipe part effectively has a rounded shape.

At one end the coupling pipe part is effectively provided with two coupling elements radially disposed opposite each other and, on the other hand, likewise with two other coupling elements radially disposed opposite each other, said coupling elements being turned through an angle of 90°, however.

The centre of the coupling pipe part may effectively be provided with abutment means disposed at an angle of 45° relative to all resilient lips whereby the coupling pipe part may serve to connect two corrugated pipe parts, the penetration of each corrugated pipe part being limited by the abutment means.

It is furthermore very advantageous that the coupling pipe part according to the invention can be easily manufactured in a short time while comprising a very uniform wall thickness. This may be achieved, for example, in that the separation of the core parts for forming a coupling pipe part according to the invention is formed over the abutment means and over the radially displaceable coupling elements in the form of resilient lips with rigid cams. Such a separation ensures that, after forming the coupling pipe part, the core can be easily pulled out of the product.

The invention will now be explained with reference to an embodiment in the drawing, wherein

Figure 1 is a sectional view of a coupling pipe part according to the invention in longitudinal direction;

Figure 2 shows the same coupling pipe part after having inserted at least one corrugated pipe part;

Figure 3 shows two core parts of a core for forming a coupling pipe part according to the invention;

Figure 4 shows a core composed of the two core parts after fitting them together with part of a coupling pipe part according to the invention;

Figure 5 is a cross-sectional view of a core with an outer mould for forming a coupling pipe part according to the invention.

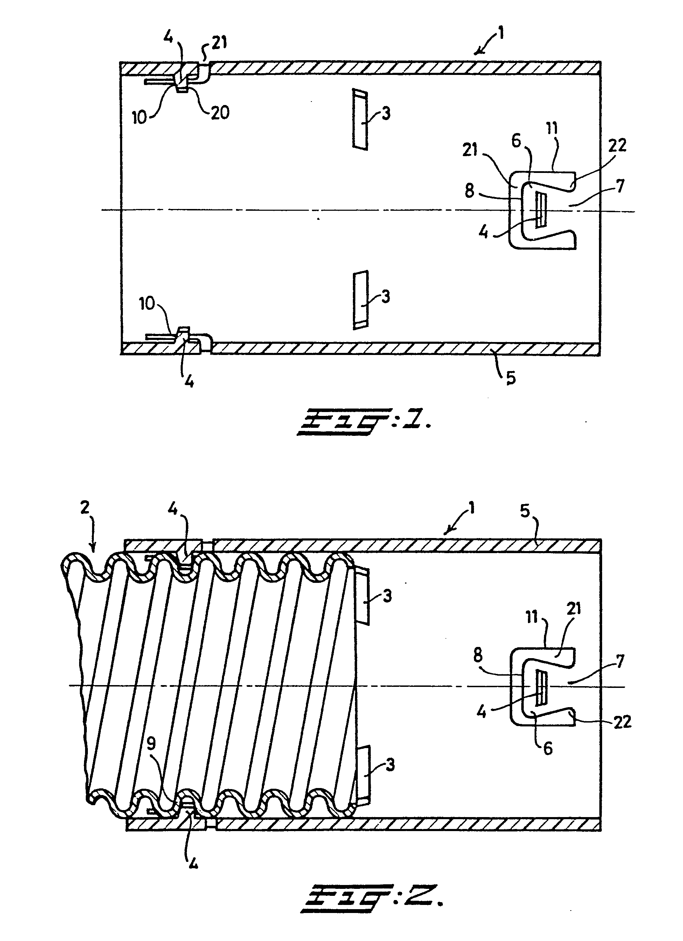

Figure 1 shows a coupling pipe part 1 made of a thermoplastics plastic, such as polyvinylchloride, for interconnecting corrugated pipe parts 2. This coupling pipe part 1 has the shape of a socket centrally provided with four abutment cams 3 evenly distributed over the circumference.

At each end of the socket-shaped coupling pipe part 1 there are located diametrically opposed coupling elements in the form of rigid coupling cams 4, resiliently disposed on axial lips 6 affixed to the pipe wall 5 of the coupling pipe part. The lip 6 is formed by providing recesses 21 in the pipe wall on three sides of the lip 6. The lip 6 is connected with the pipe wall 5 by means of a transition part 7 provided with roundings 22. It will be evident that the radius of curvature and the thickness of lip 6 are identical with those of the pipe wall, as the lip has been formed from the pipe wall 5 of the coupling pipe part 1.

As can be seen in the drawing, the width of the transition part 7, with which the lip 6 is connected to the pipe wall 5, is smaller than the width of the end edge 8 of lip 6.

In so forming the lip, the outwardly directed resilient force of the lip is quite limited, whereas the contact area between the rigid cam 4 and a flank 9 of a corrugated pipe part 2 is substantially increased.

The cams 4 comprise a radially inwardly directed back face 20, which ensures an optimum coupling between the coupling cams 4 and a corrugated pipe 2.

On the other side, a coupling cam 4 is advantageously provided with a front face 10 slanting towards the inside of the coupling pipe part, as a result of which a corrugated pipe part 2 to be inserted into the coupling pipe part 1 can easily pass the coupling cam 4, due to the radial outward displacement of the coupling element in the form of the lip 6 with the coupling cam 4.

The lips 6 with coupling cams 4 located at one end of the coupling pipe part 1 are preferably each disposed symmetrically with respect to two abutment cams 3.

At the other end of the coupling pipe part, the lips 6 with coupling cams 4 are so disposed as to be turned by 90°.

As is apparent, the incision 11 in the pipe walls of the coupling pipe part 1 about three sides of lip 6 is rectangular.

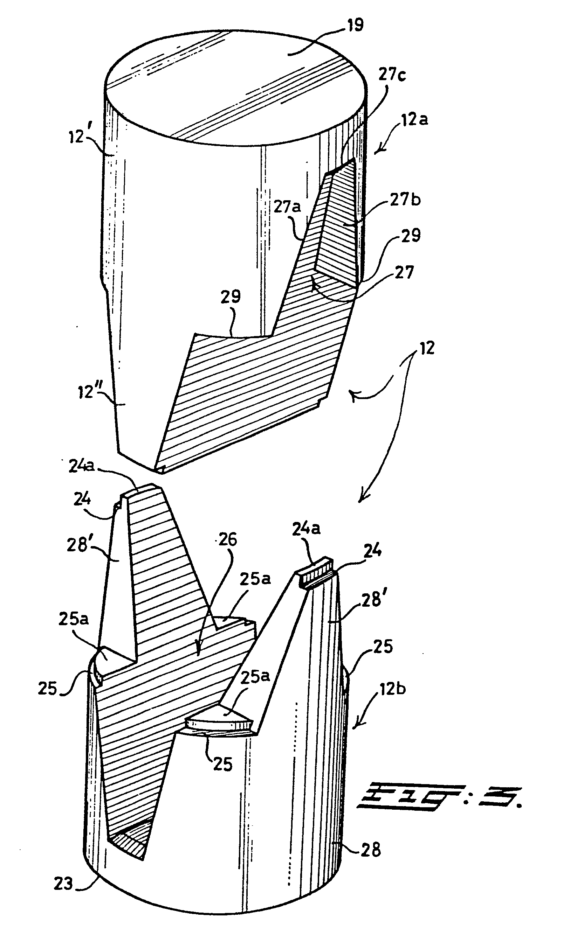

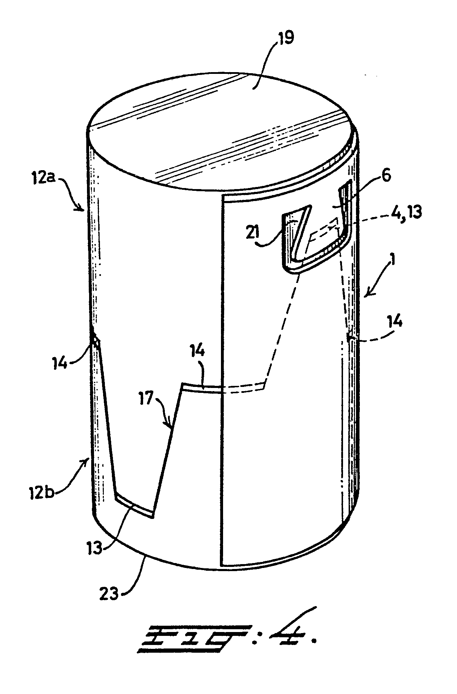

For purposes of manufacturing a coupling pipe part according to the invention, it is advantageous to use a core 12 consisting of core parts 12a and 12b (Figure 3).

The core part 12a comprises a cylindrical upper part 12' and a tapered lower part 12", there being provided in the upper part two diametrically opposed, upwardly tapered first core-part recesses 27 having conical core-part-recess side walls 27a, 27b and a core-part-recess upper wall 27c.

Next to the recess 27 there are located bounding areas.

The other core part 12b comprises a cylindrical lower part 28 and an upper part that consists of two diametrically opposed core-part projections 28' conically extending towards the end comprising an upper edge 24a. Next to the upper edge 24a the core-part projections 28' are provided on the outside with a recess having a lower edge 24. The core part 12b also comprises a central cavity 26.

On both sides of each core-part projection 28' there are located the upper faces 25a of the lower part 28, there being located on the outside also recesses with a lower face 25.

Fitting the core parts 12a and 12b into each other results in a core being formed which has a partial line 17. The cooperation of the upper faces 27c of the core recesses 27 with the upper edges 24a, produces recesses 13 in the core which are provided for the forming of the coupling cams 4 on the lips 6.

On the other hand, there will be produced other recesses 14 bounded by lower faces 25 of core part 12b and bounding faces 22 of core part 12a. The recesses 14 are provided for the forming of the abutment cams 3.

In order to form the recess 21 about the lip 6 in the pipe wall 5 of the coupling pipe part 1, an outer mould 15 is used provided with inwardly directed mould projection 16 which cooperate with the outer wall of the core 12 formed from the core parts 12a and 12b. For a proper removal, the edges of the projections are chamfered.

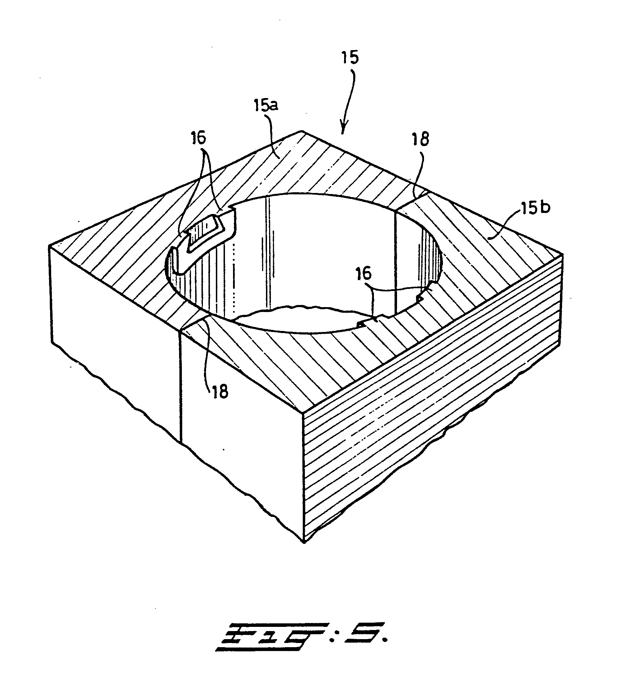

Figure 4 further shows a portion of the coupling pipe part as obtained after injection moulding.

The shape of the core partial line 17 of the core parts 12a and 12b is such that after injection moulding the core parts 12a and 12b can each be pulled out of the coupling pipe part 1 at the ends 19, 23 without any problems with the abutment cams 3 and coupling cams 4.

The partial line 18 of the outer mould half members 15a, 15b runs across the recesses 14 of the abutment cams 3, so that these mould half members can also be removed easily.

A very essential aspect of the coupling pipe part according to the invention is that in essence the coupling element consisting of lip 6 with cam 4 is secured on the pipe wall surface 5 without any deformation of said pipe wall surface occurring.

## Claims

1. Coupling pipe part (1) for interconnecting corrugated pipe parts (2) which comprises at least one coupling element (4) located at distance from the end of the pipe part and having a portion directed towards the axis of the coupling pipe part (1), said coupling element comprising a resilient lip (6) formed in the coupling pipe part (1) by wall slits (11) characterized in that the lip extends parallel to the axis of the pipe part and the part of said lip (6) provided with said inwardly directed portion has a larger width than the width of the transition area (7) between the lip (6) and the pipe wall (5) of the coupling pipe part (1).

2. Coupling pipe part according to claim 1, characterized in that a rectangular cut out (11) is provided around the lip, thereby forming a gap (21).

3. Coupling pipe part according to claim 1 or 2, characterized in that the portion comprises a rigid coupling cam (4) integral with the lip (6) and located at distance from the free end (8) of the lip (6) and said coupling cam (4) being provided with a front face (10) slanting towards the inside of the coupling pipe part.

4. Coupling pipe part according to any one or more of the preceding claims, characterized in that the coupling pipe part (1) is provided at one end with two coupling elements (4) which are radially disposed opposite each other and at the other end likewise with two coupling elements (4) radially disposed opposite each other which, however, are turned through an angle of 90°.

5. Coupling pipe part according to any one or more of the preceding claims, characterized in that the centre of the coupling pipe part (1) is provided with abutment elements (3) disposed at an angle of 45° in relation to a resilient coupling element.

6. Coupling pipe part according to any one or more of the preceding claims, characterized in that the coupling cam (4) of the coupling element is provided with a substantially radial back face (20).

7. Coupling pipe part according to any one or more of the preceding claims, characterized in that the coupling pipe part (1) is formed by means of a core which is composed of two parts (12a, 12b) and whose partial line (17, 18) lies at the location of the abutment elements (3) and coupling cams (4), an outer mould (15) being provided with inwardly directed mould projections (16) forming a gap (21) next to a lip (6) to be formed.

8. Coupling pipe part according to claim 7, characterized in that the partial line (18) of the outer mould is located at an angle of 45° with respect to the resilient coupling elements (4).

9. Pipe connection comprising a coupling pipe part and at least one corrugated pipe, characterized in that the coupling pipe part is a coupling pipe part according to any one or more of the preceding claims.

## Revendications

1. Tuyau d'accouplement (1) pour relier entre eux des éléments de tuyau ondulé (2) qui comprennent au moins un élément d'accouplement (4) situé à une certaine distance de l'extrémité de l'élément de tuyau et comprenant une portion dirigée en direction de l'axe de l'élément de tuyau d'accouplement (1), ledit élément d'accouplement comprenant une lèvre élastique (6) réalisée dans l'élément de tuyau d'accouplement (1) par des fentes de paroi (11) caractérisé en ce que la lèvre s'étend parallèlement à l'axe de l'élément de tuyau et la partie de ladite lèvre (6) munie de ladite portion dirigée vers l'intérieur présente une largeur supérieure à la largeur de la zone de transition (7) entre la lèvre (6) et la paroi de tuyau (5) de l'élément de tuyau d'accouplement (1).

2. Elément de tuyau d'accouplement selon la revendication 1, caractérisé en ce qu'une découpe rectangulaire (11) est réalisée autour de la lèvre, pour former un interstice (21).

3. Elément de tuyau d'accouplement selon la revendication 1 ou 2 caractérisé en ce que la portion comprend une came d'accouplement rigide (4) solidiare de la lèvre (6) et située à une certaine distance de l'extrémité libre (8) de la lèvre (6) et ladite came d'accouplement (4) présentant une face frontale (10) inclinée en direction de l'intérieure de l'élément de tuyau d'accouplement.

4. Elément de tuyau d'accouplement selon l'une quelconque ou plusieurs des revendications précédentes, caractérisé en ce que l'élément de tuyau d'accouplement (1) comporte, à une extrémité, deux organes d'accouplement (4) qui sont disposés radialement l'un en face de l'autre et, à l'autre extrémité, également deux organes d'accouplement (4) qui sont disposés radialement l'un en face de l'autre mais qui sont tournés d'un angle de 90°.

5. Elément de tuyau d'accouplement selon l'une quelconque ou plusieurs des revendications précédentes, caractérisé en ce que le centre de l'élément de tuyau d'accouplement (1) est doté de deux éléments de butée (3) disposés selon un angle de 45° par rapport à un organe d'accouplement élastique.

6. Elément de tuyau d'accouplement selon l'une quelconque ou plusieurs des revendications précédentes, caractérisé en ce que la came d'accouplement (4) d'un organe d'accouplement présente une face arrière sensiblement radiale (20).

7. Elément de tuyau d'accouplement selon l'une quelconque ou plusieurs des revendications précédentes caractérisé en ce que l'élément du tuyau d'accouplement (1) est réalisé à l'aide d'un noyau constitué de deux parties (12a, 12b) et dont la ligne partielle (17, 18) est située à l'emplacement des éléments de butée (3) et des cames d'accouplement (4), un moule extérieur (15) étant prévu avec des saillies de moulage (16) dirigées vers l'intérieur pour ménager un espace vide (21) à proximité d'une lèvre (6) devant être réalisée.

8. Elément de tuyau d'accouplement selon la revendication 7, caractérisé en ce que la ligne partielle (18) du moule extérieur est située sous un angle de 45° par rapport aux organes d'accouplement élastique (4).

9. Raccord de tuyau comprenant un élément de tuyau d'accouplement et au moins un tuyau ondulé, caractérisé en ce que l'élément du tuyau d'accouplement est un élément de tuyau d'accouplement selon l'une quelconque ou plusieurs des revendications précédentes.

**Patentansprüche**

1. Rohrverbindungsstück (1) zum Verbinden von gewellten Rohrteilen (2), das zumindest ein im Abstand zum Ende des Rohrstücks angeordnetes und einen zur Achse des Rohrverbindungsstücks (1) hin gerichteten Bereich aufweisendes Kupplungselement (4) aufweist, das eine durch Wandschlitze (11) im Rohrverbindungsstück (1) ausgebildete federnde Lippe (6) umfaßt, dadurch gekennzeichnet, daß sich die Lippe parallel zu der Achse des Rohrstücks erstreckt und der mit dem einwärts gerichteten Bereich versehene Teil der Lippe (6) eine größere Breite als die des Übergangsbereichs (7) zwischen der Lippe (6) und der Rohrwand (5) des Rohrverbindungsstücks (1) aufweist.

2. Rohrverbindungsstück nach Anspruch 1, dadurch gekennzeichnet, daß ein rechteckiger Ausschnitt (11) um die Lippe herum vorgesehen ist und dadurch einen Spalt (21) bildet.

3. Rohrverbindungsstück nach Anspruch 1 oder 2, dadurch gekennzeichnet, daß der Bereich einen mit der Lippe (6) aus einem Stück bestehenden und im Abstand zum freien Ende (8) der Lippe (6) angordneten starren Kupplungsnocken (4) aufweist, der mit einer zum Inneren des Rohrverbindungsstücks hin geneigten Stirnfläche (10) versehen ist.

4. Rohrverbindungsstück nach einem oder mehreren der vorhergehenden Ansprüche, dadurch gekennzeichnet, daß das Rohrverbindungsstück (1) an einem Ende mit zwei einander radial gegenüberliegend angeordneten Kupplungselementen (4) und am anderen Ende ebenfalls mit zwei einander radial gegenüberliegend angeordneten, jedoch um einen Winkel von 90° gedrehten Kupplungselementen (4) versehen ist.

5. Rohrverbindungsstück nach einem oder mehreren der vorhergehenden Ansprüche, dadurch gekennzeichnet, daß die Mitte des Rohrverbindungsstücks (1) mit Anschlagelementen (3) versehen ist, die in einem Winkel von 45° zu einem federnden Kupplungselement angeordnet sind.

6. Rohrverbindungsstück nach einem oder mehreren der vorhergehenden Ansprüche, dadurch gekennzeichnet, daß der Kupplungsnocken (4) eines Kupplungselements mit einer im wesentlichen radialen Rückfläche (20) versehen ist.

7. Rohrverbindungsstück nach einem oder mehreren der vorhergehenden Ansprüche, dadurch gekennzeichnet, daß das Rohrverbindungsstück (1) mittels eines Kerns gebildet ist, der aus zwei Teilen (12a, 12b) besteht und dessen Teillinie (17, 18) an der Stelle der Anschlagelemente (3) und der Kupplungsnocken (4) liegt, wobei ein Außenform (15) mit einwärts gerichteten Formvorsprüngen (16) vorgesehen ist, die einen Spalt (21) neben einer zu bildenden Lippe (6) bilden.

8. Rohrverbindungsstück nach Anspruch 7, dadurch gekennzeichnet, daß die Teillinie (18) der Außenform in einem Winkel von 45° zu den federnden Kupplungselementen (4) angeordnet ist.

9. Rohrverbindung mit einem Rohrverbindungsstück und zumindest einem Wellrohr, dadurch gekennzeichnet, daß das Rohrverbindungsstück ein Rohrverbindungsstück nach einem oder mehreren der vorhergehenden Ansprüche ist.

_Fig:1._

_Fig:2._

Fig. 3.

FIG. 4.

_Fig:5._